# EUROPÄISCHE PATENTSCHRIFT

(11) **EP 4 023 521 B1**
(45) Veröffentlichungstag und Bekanntmachung des Hinweises auf die Patenterteilung: **12.02.2025**
(21) Anmeldenummer: 21214570.0
(22) Anmeldetag: 14.12.2021
(51) Int. Cl.: B60W 30/12, B60W 50/14, B60W 50/16, B60W 40/072

(54) **VERFAHREN ZUM BETREIBEN EINES SPURHALTEASSISTENZSYSTEMS EINES ZUMINDEST TEILWEISE ASSISTIERT BETRIEBENEN KRAFTFAHRZEUGS, COMPUTERPROGRAMMPRODUKT SOWIE SPURHALTEASSISTENZSYSTEM**
METHOD FOR OPERATING A LANE-KEEPING ASSISTANT SYSTEM OF AN AT LEAST PARTIALLY ASSISTED MOTOR VEHICLE, COMPUTER PROGRAM PRODUCT AND LANE-KEEPING ASSISTANT SYSTEM
PROCÉDÉ DE FONCTIONNEMENT D'UN SYSTÈME D'AIDE AU MAINTIEN DE LA VOIE D'UN VÉHICULE AUTOMOBILE FONCTIONNANT DE MANIÈRE AU MOINS PARTIELLEMENT ASSISTÉE, PRODUIT-PROGRAMME INFORMATIQUE, AINSI QUE SYSTÈME D'AIDE AU MAINTIEN DE LA VOIE

(30) Priorität: 05.01.2021 DE 102021200023
(43) Veröffentlichungstag der Anmeldung: 06.07.2022
(73) Patentinhaber: VOLKSWAGEN AG, 38440 Wolfsburg (DE)
(72) Erfinder: Münning, Dr. Daniel, 38124 Braunschweig (DE); Ackert, Lukas, 38373 Frellstedt (DE)

(56) Entgegenhaltungen:
- DE-A1- 102017 122 797
- DE-A1- 102018 203 237
- US-A1- 2014 358 321
- US-A1- 2020 110 422

## Beschreibung

Die Erfindung betrifft ein Verfahren zum Betreiben eines Spurhalteassistenzsystems eines zumindest teilweise assistiert betriebenen Kraftfahrzeugs, bei welchem mittels einer optischen Erfassungseinrichtung des Spurhalteassistenzsystems eine Umgebung des Kraftfahrzeugs mit einer potenziellen Fahrspur erfasst und mittels einer elektronischen Recheneinrichtung des Spurhalteassistenzsystems ausgewertet wird und bei welcher Abhängigkeit von der ausgewerteten Umgebung eine zumindest teilweise assistierte Spurhaltebewegung mittels einer Querregelungseinrichtung des Spurhalteassistenzsystems durchgeführt wird, wobei bei der Auswertung der Umgebung von einer kraftfahrzeugexternen elektronischen Recheneinrichtung bereitgestellte Schwarmdaten berücksichtigt werden. Ferner betrifft die Erfindung ein Computerprogrammprodukt sowie ein Spurhalteassistenzsystem.

Aus dem Stand der Technik sind bereits Spurhalteassistenzsysteme bekannt, welche insbesondere für eine querführende Fahrerunterstützung sorgen. Insbesondere können diese querführenden Fahrerassistentsysteme als Travel Assist bezeichnet werden und eine entsprechende Zulassung für den Straßenverkehr aufweisen. In bisherigen Umsetzungen basiert die Querführung im Wesentlichen aus von einer Kamera kommenden Spuren, welche insbesondere auch als eine sogenannte Liveerkennung von Fahrbahnmarkierungen bezeichnet werden kann. Beispielsweise auf Landstraßen welche nur eine Spurmarkierung aufweisen, kann es oftmals schwer werden diese Markierungen mittels der Kamera zu erfassen und eine entsprechende Querführung muss unterdrückt werden. Ferner ist bekannt, dass insbesondere mittels den Spurhalteassistenzsystemen das Kraftfahrzeug möglichst spurmittig gefahren wird.

Die DE 10 2019 114 527 A1 offenbart ein System und ein Verfahren zum Extrahieren von fahrzeugspurbezogenen Informationen bestimmter Straßensegmente durch Sammeln von fahrdynamischen Datenspuren. Ein Verfahren zum Steuern des Betriebs eines Kraftfahrzeugs schließt das Bestimmen des Fahrzeugstandortes, das Identifizieren eines Straßensegmentes, das dem Standort des Fahrzeugs entspricht, das Empfangen von außenbezogenen Daten, die diesem Straßensegment zugeordnet sind mit ein. Ferner erfolgt ein Bestimmen eines Drehwinkels und einer Mittellinie für das Straßensegment. Die Fahrzeugdaten werden ausgewertet, die Fahrzeugstandorte und Dynamik für mehrere Fahrzeuganzeigen, die auf dem Straßensegment fahren. Es erfolgt ein Bestimmen von Trajektoriendaten, die Startpunkte, Endpunkte und Mittellinienversatzabstände für diese Fahrzeuge anzeigen. Die Gesamtfahrspuren werden für das Straßensegment identifiziert, indem die Trajektoriendaten mit einem Cluster Ring-Algorithmus verarbeitet werden, der den Drehwinkel und die Mittellinie angibt. Die virtuellen Trajektorien für die Fahrspuren werden extrahiert und ein Fahrzeugbussystem wird angewiesen, einen Steuervorgang basierend auf einer extrahierten virtuellen Trajektorie für mindestens eine Fahrspur auszuführen.

Die US 2014/0358322 A1 beschreibt eine Methode und eine Infrastruktur für den Umgang mit dem Problem der Übereinstimmung auf Fahrspurebene und es sind verschiedene Methoden zur Schätzung von Positionskorrekturen vorgestellt, des Vertrauens in die Übereinstimmung von Position und Karte, des selbstkorrigierenden Kartenabgleichs sowie von Abbiege- und Spurwechselereignissen. Zusätzlich zu den beschriebenen Algorithmen können V2V-Daten, sofern verfügbar, zur Unterstützung der gesamten besprochenen Algorithmusschritte verwendet werden. Wenn die relative GPS-Genauigkeit zwischen dem Host-Fahrzeug und den entfernten Fahrzeugen in der Nähe des Host-Fahrzeugs ausreicht, um das Fahrzeug in der Fahrspur zu trennen, und es genügend Fahrzeuge auf allen interessierenden Fahrspuren gibt, dann wird bestimmt, auf welcher Fahrspur sich das Host-Fahrzeug befindet.

Die DE 10 2018 203 237 A1 betrifft ein Verfahren zum Bereitstellen von Kartendaten eines Streckenabschnitts zur Querregelung eines Fahrzeugs, das Verfahren umfassend: Erfassen einer Trajektorie eines Streckenabschnitts eines Fahrzeugs, das den Streckenabschnitt überfährt; Übermitteln der Trajektorie des Streckenabschnitts des Fahrzeugs an einen Server; Empfangen der Trajektorie des Streckenabschnitts des Fahrzeugs durch den Server; Aggregieren der empfangenen Trajektorie des Streckenabschnitts des Fahrzeugs durch den Server, wobei die empfangene Trajektorie mit weiteren, von dem Server für den Streckenabschnitt empfangenen Trajektorien durch den Server aggregiert wird; Bestimmen eines Gütekriteriums der Kartendaten des Streckenabschnitts durch ein Vergleichen der aggregierten Trajektorie des Streckenabschnitts mit den Kartendaten des Streckenabschnitts; Anpassen der Kartendaten des Streckenabschnitts basierend auf der aggregierte Trajektorie, falls des bestimmte Gütekriterium anzeigt, dass die aggregierte Trajektorie des Streckenabschnitts genauer als die Kartendaten des Streckenabschnitts sind; und Bereitstellen der angepassten Kartendaten von dem Server an das Fahrzeug und/oder wenigstens ein weiteres Fahrzeug, das den Streckenabschnitt überfahren wird.

Die US 2014/358321 A1 beschreibt, dass die Schätzung der Fahrbahnbegrenzung sowie die Position und Ausrichtung des Host-Fahrzeugs innerhalb der Host-Spur werden hier mit Hilfe eines V2V-Systems. Die Erkennung und Verfolgung von Fahrspurbegrenzungen ist für viele aktive Sicherheits-/ADAS-Anwendungen unerlässlich. Die Position der Fahrbahnbegrenzung ermöglicht die Verfolgung der Position und Orientierung des Host-Fahrzeugs innerhalb der Fahrspur. Sie ermöglicht auch die Klassifizierung von Fahrzeugen innerhalb der Fahrspur, der angrenzenden Fahrspuren und der anderen Fahrspuren. Diese beiden Funktionen ermöglichen aktive Sicherheitsanwendungen. Es ermöglicht auch die seitliche Kontrolle des Fahrzeugs für Spurhalteassistenten oder die vollständige seitliche Kontrolle für automatisierte Fahrzeuge.

Aufgabe der folgenden Erfindung ist es ein Verfahren, ein Computerprogrammprodukt sowie ein Spurhalteassistenzsystem zu schaffen, mittels welchen eine verbesserte Querführung bei einem zumindest teilweise assistierten Betrieb des Kraftfahrzeugs realisiert werden kann.

Dieser Aufgabe wird durch ein Verfahren, ein Computerprogrammprodukt sowie ein Spurhalteassistenzsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines Spurhalteassistenzsystems eines zumindest teilweise assistiert betriebenen Kraftfahrzeugs, bei welchem mittels einer optischen Erfassungseinrichtung des Spurhalteassistenzsystems eine Umgebung des Kraftfahrtzeugs mit einer potenziellen Fahrspur erfasst, und mittels einer elektronischen Recheneinrichtung des Spurhalteassistenzsystems ausgewertet wird und bei welchen in Abhängigkeit von der ausgewerteten Umgebung eine teilweise assistierte Spurhaltebewegung mittels einer Querregelungseinrichtung des Spurhalteassistenzsystems durchgeführt wird, wobei bei der Auswertung der Umgebung von einer kraftfahrzeugexternen elektronischen Recheneinrichtung bereitgestellte Schwarmdaten berücksichtigt werden.

Es ist vorgesehen, dass auf Basis der Schwarmdaten eine zukünftige befahrbare Strecke, welche außerhalb des Erfassungsbereichs der optischen Erfassungseinrichtung ist, ausgewertet wird und eine zukünftige zumindest teilweise assistierte Spurhaltebewegung für die Querregelungseinrichtung bestimmt wird.

Somit können die Schwarmdaten dazu genutzt werden, um eine verbesserte Querführung bei einem zumindest teilweise assistierten Betrieb des Kraftfahrzeugs durchzuführen. Insbesondere kann eine künftig befahrbare Strecke, welche insbesondere mittels der Spurhaltebewegung abgefahren werden soll, entsprechend ausgewertet werden. Insbesondere stammen die Schwarmdaten von Kraftfahrzeugen, die bereits die gleiche Strecke befahren haben. Somit kann auf Basis der Schwarmdaten auf bereits existierende Informationen zurückgegriffen werden, wodurch dann wiederum die zukünftig befahrbare Strecke entsprechend ausgewertet werden kann und beispielsweise bezüglich einer assistierten Befahrbarkeit geprüft werden kann.

Insbesondere wird somit vorgeschlagen, die entsprechenden Schwarmdaten als Regelquelle für die zukünftige Fahrt zu nutzen. Beispielsweise können auf Landstraßen mit nur einer Spurmarkierung die Schwarmdaten entsprechend genutzt werden, um zum Beispiel an dem gefahrenen Weg von weiteren Kraftfahrzeugen die eine Spur virtuell zu spiegeln, um so entsprechend zwei Spuren zu haben, wodurch eine Querführung auch auf diesem Streckenabschnitt des Kraftfahrzeugs durchgeführt werden kann. Insbesondere kann somit auch für bestimmte Situationen die Spurmittenführung weiterhin aufrechterhalten werden, sollte beispielsweise nur eine Linie bekannt sein, so kann die Spiegelung an dem gefahrenen Weg durchgeführt werden und somit eine zweite virtuelle Linie generiert werden. Ferner kann über eine Kreuzung gefahren werden, ohne dass dort Linien vorhanden sind, indem einfach dem gefahrenen Weg von den weiteren Kraftfahrzeugen, mit anderen Worten den Schwarmdaten, "hinterhergefahren" wird.

Insbesondere ist somit durch die Verwendung von den Schwarmdaten eine bessere Vorausschau möglich. Insbesondere, da beispielsweise die optische Erfassungseinrichtung, welche insbesondere als Kamera ausbildet ist, lediglich 50 Meter Erfassungsreichweite hat, kann auf Basis der Schwarmdaten auch über diese Erfassungsreichweite hinweg bereits eine Spurhaltebewegung entsprechend geplant werden.

Es wird auf Basis der Schwarmdaten eine zumindest teilweise befahrbare Länge der Fahrspur und/oder eine zumindest teilweise assistiert befahrbare Zeit auf der Fahrspur, ohne eine Detektion der Fahrspur mittels der optischen Erfassungseinrichtung, bestimmt. Sollte beispielsweise auf entsprechenden Fahrspuren keine Fahrspur mittels der Kamera entdeckt worden sein, so ist es gemäß dem Stand der Technik derzeit so, dass lediglich beispielsweise 85 Meter ohne eine entsprechende optische Erkennung assistiert geführt werden dürfen. Durch die Nutzung der Schwarmdaten kann dies entsprechend verlängert werden, da beispielsweise bestimmt werden kann, dass weitere Kraftfahrzeuge über mehrere Kilometer auch ohne die Fahrbahnspur bereits gefahren sind. Diese Schwarmdaten werden somit genutzt, um eine entsprechende Länge der Fahrspur beziehungsweise Zeit für die assistierte Bewegung auswerten und verlängern zu können. Somit kann eine verbesserte Querführung für ein zumindest teilweise assistiert fahrendes Kraftfahrzeugs realisiert werden.

Ferner werden beim Bestimmen der Länge und/oder der Zeit ein aktuelles Wetter und/oder ein Straßentyp und/oder ein Ereignis und/oder ein Fahrerzustand eines Fahrers des Kraftfahrzeugs und/oder eine Historie der Schwarmdaten berücksichtigt . Insbesondere können auch die verschiedenen Arten von Schwarmdaten, beispielsweise ob nur eine Livespur und eine virtuelle Spur vorliegt, oder keine Livespur und zwei virtuelle Spuren vorliegen ebenfalls genutzt werden. Somit kann die erlaubte Dauer beziehungsweise die erlaubte Strecke unter anderem in Abhängigkeit von der Art der Nutzung der Schwarmdaten im Algorithmus berücksichtigt werden. Durch die weiteren Daten kann beispielsweise vorgesehen sein, dass in Abhängigkeit der jeweiligen Umgebung eine zuverlässige Bestimmung für die Länge und für die Dauer der Nutzung der assistierten Bewegung durchgeführt werden kann.

In einer weiteren vorteilhaften Ausgestaltungsform wird auf Basis der Schwarmdaten zumindest ein die Fahrspur charakterisierendes Kriterium bestimmt und vorhergesagt. Beispielsweise kann es sich bei dem charakterisierenden Kriterium um beispielsweise eine Kurvenkrümmung und/oder eine Fahrspurmitte und/oder einen Trennstreifen/Mittelstreifen und/oder einen jeweiligen Seitenstreifen handeln. Somit kann auf Basis der Schwarmdaten die virtuelle Fahrspur zuverlässig erzeugt werden, wodurch eine zuverlässige zumindest teilweise assistierte Spurhaltebewegung durchgeführt werden kann.

Ferner hat es sich als vorteilhaft erwiesen, wenn eine Verfügbarkeit des Spurhalteassistenzsystems in Abhängigkeit von der prognostizierten zukünftigen teilweise assistierten Bewegung und in Abhängigkeit von der aktuellen und/oder zukünftigen Position des Kraftfahrzeugs bestimmt wird. Beispielsweise kann eine Kurvenkrümmung außerhalb des Erfassungsbereichs der Kamera bereits frühzeitig erfasst werden. Sollte beispielsweise dann prognostiziert werden, dass innerhalb dieser Kurvenkrümmung keine zumindest teilweise assistierte Spurhaltebewegung realisiert werden kann, so kann dies ebenfalls bestimmt werden. Insbesondere auf Basis der aktuellen Position kann eine Auswertung bezüglich eines solchen Ereignisses bestimmt werden. Ferner kann auch auf Basis der zukünftigen Position, beispielsweise auf Basis einer Fahrroute, eine solche Situation bestimmt werden.

Ebenfalls vorteilhaft ist, sollte bestimmt werden, dass das Spurhalteassistenzsystem nicht zur Verfügung steht, so wird eine Warnnachricht für einen Fahrer des Kraftfahrzeugs ausgegeben. Insbesondere erfolgt dies bereits frühzeitig und bevor das Kraftfahrzeug den Ort erreicht, an welchem ein entsprechendes Spurhalteassistenzsystem nicht mehr zur Verfügung steht. Insbesondere kann diese Warnnachricht sowohl optisch als auch haptisch als auch akustisch ausgegeben werden. Da dem Fahrer bereits frühzeitig mitgeteilt wird, dass eine Spurhalteassistenzfunktion bald nicht mehr zur Verfügung steht, kann dieser selbst in den Fahrbetrieb einlenken. Insbesondere kann dem Fahrer mit einer, vorzugsweise regelmäßig aktualisierten, Distanz- oder Zeitangabe bis zum Erreichen des entsprechenden Ortes, präzise die Information gegeben werden, ab welchem Zeitpunkt er nicht mehr mit dem Einsatz des Spurhalteassistenzsystems rechnen, um sich darauf einstellen zu können, selber in die Lenkung eingreifen zu müssen. Somit wird die Sicherheit des Spurhaltesystems massiv erhöht, insbesondere im Vergleich zu rein kamerabasierten Lösungen, wie sie heute bekannt sind, die sehr plötzlich aufhören zur Verfügung zu stehen und somit permanente Aufmerksamkeit des Fahrers erfordern.

Weiterhin vorteilhaft ist, sollte bestimmt werden, dass das Spurhalteassistenzsystem nur eingeschränkt zur Verfügung steht, so wird eine Warnnachricht für einen Fahrer des Kraftfahrzeugs ausgegeben, wobei die Warnnachricht beschreibt, welche Assistenzfunktion des Spurhalteassistenzsystems eingeschränkt ist. Sollte beispielsweise eine entsprechende Straßenkrümmung entdeckt werden, so kann beispielsweise dem Fahrer mitgeteilt werden, dass diese Straßenkrümmung unter Beibehaltung der zumindest teilweise assistierten Bewegung lediglich mit einer Geschwindigkeit von 20 km/h durchgeführt werden kann. Somit muss der Fahrer entweder entsprechend das Kraftfahrzeug abbremsen beziehungsweise muss das Assistenzsystem auch eine Längsregelung durchführen. Diese Information kann dem Fahrer wiederum mitgeteilt werden, sodass dieser darüber in Kenntnis gesetzt ist oder beispielsweise die Fahraufgabe selbst an dieser Stelle übernehmen kann.

Bei einer weiteren vorteilhaften Ausgestaltungsform wird die zumindest teilweise assistierte, zukünftig befahrbare Strecke bei einer Routenplanung des Kraftfahrzeugs berücksichtigt. Sollte beispielsweise festgestellt werden, dass eine Fahrroute vorliegt, an welcher die entsprechende Querregelung nicht mehr durchgeführt werden kann, so kann dies berücksichtigt werden. Sollte beispielsweise der Fahrer wünschen, dass die Strecke mit einer durchgehenden Querregelung abzufahren ist, so kann eine entsprechende weitere Route bestimmt werden, bei welcher eine Nichtverfügbarkeit der Querregelung ausgeschlossen ist.

Bei dem vorgestellten Verfahren handelt es sich insbesondere um ein computerimplementiertes Verfahren. Hierzu betrifft ein weiterer Aspekt der Erfindung ein Computerprogrammprodukt mit Programmbefehlen, welche bewirken, wenn die Programmbefehle auf einer elektronischen Recheneinrichtung abgearbeitet werden, ein Verfahren nachdem vorhergehenden Aspekt durchzuführen. Die elektronische Recheneinrichtung weist dazu insbesondere Schaltkreise, insbesondere integrierte Schaltkreise, und Prozessoren sowie weitere elektronische Bauteile auf, um die entsprechenden Programmbefehle abarbeiten zu können.

Ein nochmals weiterer Aspekt der Erfindung betrifft ein Spurhalteassistenzsystem für ein zumindest teilweise assistiert betreibbares Kraftfahrzeug, mit zumindest einer optischen Erfassungseinrichtung und mit zumindest einer elektronischen Recheneinrichtung, wobei das Spurhalteassistenzsystem zum Durchführen eines Verfahrens nach dem vorhergehenden Aspekt ausgebildet ist. Insbesondere wird das Verfahren mittels des Spurhalteassistenzsystems durchgeführt.

Ein nochmals weiterer Aspekt der Erfindung betrifft ein Kraftfahrzeug mit einem Spurhalteassistenzsystem nach dem vorhergehenden Aspekt. Das Kraftfahrzeug ist insbesondere zumindest teilweise assistiert ausgebildet.

Vorteilhafte Ausgestaltungsformen des Verfahrens sind als vorteilhafte Ausgestaltungsformen des Computerprogrammprodukts, des Spurhalteassistenzsystems sowie des Kraftfahrzeugs anzusehen. Das Spurhalteassistenzsystem sowie das Kraftfahrzeug weisen dazu gegenständliche Merkmale auf, welche eine Durchführung des Verfahrens oder eine vorteilhafte Ausgestaltungsform davon ermöglichen.

Zu der Erfindung gehören auch Weiterbildungen des erfindungsgemäßen Spurhalteassistenzsystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
Fig. 1: Eine schematische Draufsicht auf eine Ausführungsform eines Kraftfahrzeugs mit einer Ausführungsform eines Spurhalteassistenzsystems; und
Fig. 2: Eine weitere schematische Draufsicht auf eine weitere Ausführungsform eines weiteren Kraftfahrzeugs mit einer Ausführungsform eines weiteren Spurhalteassistenzsystems.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

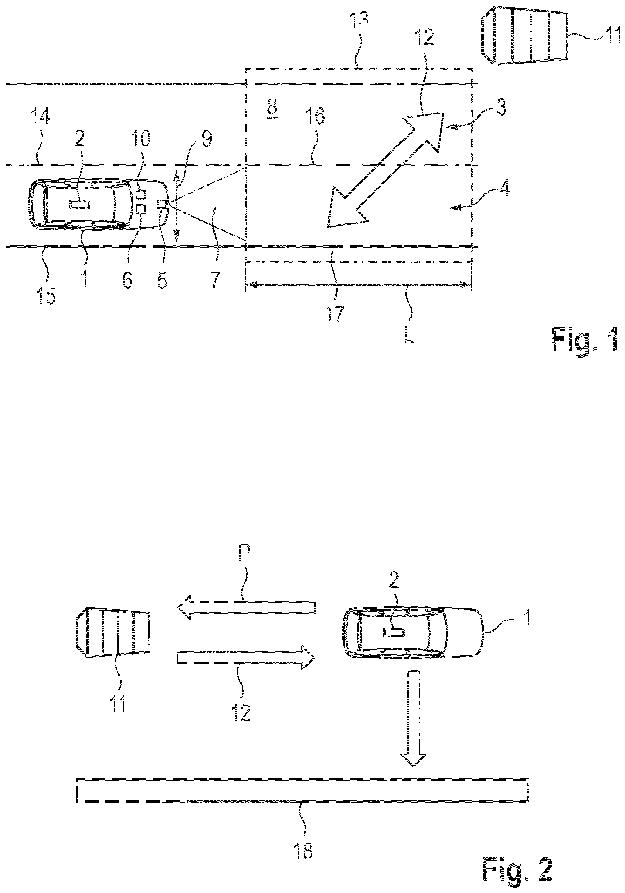

Figur 1 zeigt eine schematische Draufsicht auf eine Ausführungsform eines Kraftfahrzeugs 1 mit einer Ausführungsform eines Spurhalteassistenzsystems 2. Das Kraftfahrzeug 1 befindet sich auf einer Straße 3. Die Straße 3 wiederum weist eine Fahrspur 4 auf.

Das Spurhalteassistenzsystem 2 ist für das zumindest teilweise assistiert betriebene Kraftfahrzeug 1 ausgebildet. Das Spurhalteassistenzsystem 2 weist hierzu einer optische Erfassungseinrichtung 5 auf, welche insbesondere als Kamera ausgebildet ist. Ferner weist das Spurhalteassistenzsystem 2 zumindest eine elektronische Recheneinrichtung 6 auf. Mit der Kamera 5 kann ein Erfassungsbereich 7 erfasst werden. Insbesondere kann zumindest bereichsweise die Fahrspur 4 mit der optischen Erfassungseinrichtung 5 erfasst werden.

Insbesondere ist vorgesehen, dass mittels der optischen Erfassungseinrichtung 5 des Spurhalteassistenzsystems 2 eine Umgebung 8 des Kraftfahrzeugs 1, insbesondere die Straße 3 beziehungsweise die Fahrspur 4, erfasst wird. Insbesondere wird die Umgebung 8 mit der potentiellen Fahrspur 4 erfasst und mittels der elektronischen Recheneinrichtung 6 des Spurhalteassistenzsystems wird die Umgebung 8 beziehungsweise die Fahrspur 4 ausgewertet. In Abhängigkeit von der ausgewerteten Umgebung 8 findet eine teilweise assistierte Spurhaltebewegung 9 mittels einer Querregelungseinrichtung 10 des Spurhalteassistenzsystems 2 statt, wobei bei der Auswertung der Umgebung 8 von einer kraftfahrzeugexternen elektronischen Recheneinrichtung 11 bereitgestellte Schwarmdaten 12 berücksichtigt werden. Es ist vorgesehen, auf Basis der Schwarmdaten 12 eine zukünftig befahrene Strecke 13, welche außerhalb des Erfassungsbereichs 7 der optischen Erfassungseinrichtung 5 ist, ausgewertet wird und eine zukünftige teilweise assistierte Spurhaltebewegung 9 für die Querregelungseinrichtung 10 bestimmt wird.

Vorliegend ist insbesondere gezeigt, dass auf Basis der Schwarmdaten 12 eine zumindest teilweise befahrbare Länge L der Fahrspur 4 und/oder zumindest teilweise assistiert befahrbare Zeit auf der Fahrspur 4, ohne eine Direktion der Fahrspur 4 mittels der optischen Erfassungseinrichtung 5, bestimmt wird.

Insbesondere ist vorliegend gezeigt, dass die Straße 3 einen Mittelstreifen 14 beziehungsweise eine Trennlinie sowie eine Begrenzungslinie 15 aufweist. Der Mittelstreifen 14 sowie die Begrenzungslinie 15 sind mittels der optischen Erfassungseinrichtung 5 erfasst worden. Insbesondere handelt es sich somit um Livedaten. Außerhalb des Erfassungsbereichs 7 kann insbesondere eine virtuelle Mittellinie 16 sowie eine virtuelle Begrenzungslinie 17 auf Basis der Schwarmdaten 12 prognostiziert werden.

Insbesondere können somit auf Basis der Schwarmdaten 12 auch weite Strecken, beispielsweise weiter als 85 Meter mit der assistierten Spurhaltebewegung 9 abgefahren werden. Insbesondere, da es verschiedene Arten der Nutzung der Schwarmdaten 12 gibt, zum Beispiel eine Livespur plus eine virtuelle Spur, oder keine Livespur und zwei virtuelle Spuren, kann die erlaubte Dauer beziehungsweise Länge L unter anderem in Abhängigkeit von der Art der Nutzung dieser Schwarmdaten 12 im Algorithmus berücksichtigt werden.

Insbesondere kann beim Bestimmen der Länge L und/oder der Zeit ein aktuelles Wetter und/oder ein Straßentyp und/oder ein Ereignis, beispielsweise eine Baustelle, und/oder ein Fahrerzustand eines Fahrers des Kraftfahrzeugs 1 und/oder eine Historie der Schwarmdaten 12 berücksichtigt werden. Unter Fahrerzustand kann beispielsweise angesehen werden, ob der Fahrer die Hände am Lenkrad hat beziehungsweise auf Basis einer Fahrerbeobachtungskamera eine entsprechende Auswertung durchgeführt werden. Ferner kann bei der Art der Spiegelung, beispielsweise ob eine Linie vorhanden ist oder ob keine Linie vorhanden ist, bei der Bestimmung der Länge L und/oder der Zeit berücksichtigt werden.

Sollte beispielsweise gutes Wetter vorliegen, das Kraftfahrzeug 1 sich auf einer Autobahn befinden und keine Baustelle vorhanden sein, so kann, obwohl beide Spuren beispielsweise nicht erkannt wurden, da jedoch die Schwarmdaten 12 über eine vorgegebene Zeitspanne sehr gute Übereinstimmung mit den Livedaten aufwiesen, die erlaubte Länge L auf 5000 Meter beschränkt werden. Sollte in einem weiteren Beispiel gutes Wetter vorliegen, das Kraftfahrzeug 1 sich auf einer Autobahn befinden und keine Baustelle vorliegen, dennoch eine erkannte Fahrspur wegfallen, wobei die Schwarmdaten 12 über eine vorgegebene Strecke eine sehr gute Übereinstimmung mit den Livedaten aufgewiesen haben, so kann der erlaubte Weg für die Spurhaltebewegung 9 auch unbeschränkt freigegeben werden. Als drittes Beispiel, sollte beispielsweise schlechtes Wetter, eine Autobahn oder einer Baustelle detektiert worden sein und gleichzeitig eine Spur wegfallen, so können die Schwarmdaten 12 auch über eine vorgegebene Länge bereits gut übereinstimmendmit den Livedaten sein, so dass die Wegstrecke für eine assistierte Spurhaltebewegung auf 100 Meter begrenzt werden kann.

Figur 2 zeigt in einer weiteren schematischen Draufsicht eine weitere Ausführungsform des Spurhalteassistenzsystems 2 im Kraftfahrzeug 1. Vorliegend ist insbesondere gezeigt, dass auch eine Verfügbarkeit des Spurhalteassistenzsystems 2 in Abhängigkeit von der prognostizierten zukünftig teilweise assistierten Spurhaltebewegung 9 und in Abhängigkeit von der aktuellen und/oder einer zukünftigen Position P bestimmt werden kann. Sollte beispielsweise bestimmt werden, dass das Spurhalteassistenzsystem 2 nicht zur Verfügung steht, so kann eine Warnnachricht für den Fahrer des Kraftfahrzeugs 1 ausgegeben werden. Sollte bestimmt werden, dass das Spurhalteassistenzsystem 2 nur eingeschränkt zur Verfügung steht, so kann eine Warnnachricht für einen Fahrer des Kraftfahrzeugs 1 ausgegeben werden, wobei die Warnnachricht beschreibt, welche Assistenzfunktion des Spurhalteassistenzsystems 2 eingeschränkt ist.

Ferner kann vorgesehen sein, dass die zumindest teilweise assistierte, zukünftig befahrbare Strecke bei einer Routenplanung des Kraftfahrzeugs 1 berücksichtigt wird. Hierzu können insbesondere die Verfügbarkeiten, die Art der Querführung, Geschwindigkeiten und Wetter beispielsweise von einer Navigationseinrichtung 18 des Kraftfahrzeugs 1 zur Verfügung gestellt werden. Für die Routenberechnung der Navigationseinrichtung 18 werden insbesondere Straßenabschnitte bei denen aufgrund der Schwarmdaten 12 ermittelt wurde, dass dort das Spurhalteassistenzsystem 2 zur Verfügung steht und somit einsetzbar sind, bevorzugt werden. Das geschieht für die üblichen Routenberechnungsalgorithmen vorzugsweise per Anpassung der Gewichtung des Straßenabschnittes für die Navigationsroute.

Insbesondere ist somit vorgeschlagen, dass mittels des Spurhalteassistenzsystems 2 das Kraftfahrzeug 1 möglichst spurmittig zumindest teilweise assistiert gefahren wird. Mithilfe der Schwarmdaten 12 kann die Spurmittenführung in bestimmten Situationen weiterhin aufrechterhalten bleiben. Sollte beispielsweise nur eine Linie erkannt worden sein, so kann eine Spiegelung auf dem gefahrenen Weg durchgeführt werden. Eine zweite virtuelle Linie kann generiert werden. Über eine Kreuzung kann auch beispielsweise ohne Linien gefahren werden, indem beispielsweise dem gefahrenen Weg von anderen Kraftfahrzeugen gefolgt wird. Wenn dem Kraftfahrzeug 1 die Information vorliegt, wie viel Prozent einer vor einem liegenden Strecke durch andere Kraftfahrzeuge bereits mit einem Assistenzsystem gefahren wurden, kann dies zum Beispiel in einem Navigationsplan berücksichtigt werden.

In einer weiteren Ausbildung kann dem Fahrer auch der Anteil der möglichen Querführung in zum Beispiel der Navigationseinrichtung 18 angezeigt werden. Beispielsweise kann eine Farbskala ausgegeben werden von rot nach grün, wobei rot weniger als 10 % des Weges bedeutet, und grün bedeutet, dass des Spurhalteassistenzsystem 2 durchgehend, insbesondere über 90 %, zur Verfügung steht.

Insbesondere können Geschwindigkeitsdaten, erkannte Spurmarkierungen, eine Nutzung des Spurhalteassistenzsystems 2 ohne Schwarmdaten 12 oder eine Nutzung des Spurhalteassistenzsystems 2 mit Schwarmdaten 12 ausgewertet werden und ebenfalls an die kraftfahrzeugexterne elektronische Recheneinrichtung 11 zur Auswertung übergeben werden. Hierzu kann dann eine Spiegelung von beispielsweise einer Linie oder auch von mehreren Linien durchgeführt werden.

Auf der Navigationseinrichtung 18 beziehungsweise auf einer Ausgabeeinrichtung, beispielsweise ein Bildschirm, im Kraftfahrzeug 1, kann dann eine Anzeige der zur erwartenden Unterstützung, zum Beispiel auf Basis einer Farbskala, oder gestrichelte Linien, um die Strecke anzuzeigen, erfolgen. Ferner kann eine Berücksichtigung bei einer Routenplanung durchgeführt werden. Des Weiteren kann beispielsweise bei kurvigen Landstraßen eine Information an den Fahrer ausgegeben werden, dass eine Querführung in der Kurve nicht mehr zur Verfügung stehen wird. Mit den Schwarmdaten 12 kann somit eine bessere Vorausschau und eine Warnung erfolgen.

### Bezugszeichenliste

- 1: Kraftfahrzeug
- 2: Spurhalteassistenzsystem
- 3: Straße
- 4: Fahrspur
- 5: optische Erfassungseinrichtung
- 6: elektronische Recheneinrichtung
- 7: Erfassungsbereich
- 8: Umgebung
- 9: Spurhaltebewegung
- 10: Querregelungseinrichtung
- 11: kraftfahrzeugexterne elektronische Recheneinrichtung
- 12: Schwarmdaten
- 13: Zukünftig befahrbare Strecke
- 14: Mittelstreifen
- 15: Begrenzungslinie
- 16: virtueller Mittelstreifen
- 17: virtuelle Begrenzungslinie
- 18: Naviagtionseinrichtung

- L: Länge
- P: Position

## Patentansprüche

1. Verfahren zum Betreiben eines Spurhalteassistenzsystems (2) eines zumindest teilweise assistiert betriebenen Kraftfahrzeugs (1), bei welchem mittels einer optischen Erfassungseinrichtung (5) des Spurhalteassistenzsystems (2) eine Umgebung (8) des Kraftfahrzeugs (1) mit einer potentiellen Fahrspur (4) erfasst und mittels einer elektronischen Recheneinrichtung (5) des Spurhalteassistenzsystems (2) ausgewertet wird und bei welchem in Abhängigkeit von der ausgewerteten Umgebung (8) eine zumindest teilweise assistierte Spurhaltbewegung (9) mittels einer Querregelungseinrichtung (10) des Spurhalteassistenzsystems (2) durchgeführt wird, wobei bei der Auswertung der Umgebung (8) von einer kraftfahrzeugexternen elektronischen Recheneinrichtung (11) bereitgestellte Schwarmdaten (12) berücksichtigt werden, wobei
auf Basis der Schwarmdaten (12) eine zukünftige befahrbare Strecke (13), welche außerhalb eines Erfassungsbereichs (7) der optischen Erfassungseinrichtung (5) ist, ausgewertet wird und eine zukünftige teilweise assistierte Spurhaltebewegung (9) für die Querregelungseinrichtung (10) bestimmt wird, wobei auf Basis der Schwarmdaten (12) eine zumindest teilweise befahrbare Länge (L) der Fahrspur (4) und/oder eine zumindest teilweise assistiert befahrbare Zeit auf der Fahrspur (4), ohne eine Detektion der Fahrspur (4) mittels der optischen Erfassungseinrichtung (5), bestimmt wird, **dadurch gekennzeichnet, dass**
beim Bestimmen der Länge (L) und/oder der Zeit ein aktuelles Wetter und/oder ein Straßentyp und/oder ein Ereignis und/oder ein Fahrerzustand eines Fahrers des Kraftfahrzeugs (1) und/oder eine Historie der Schwarmdaten (12) berücksichtigt werden.

2. Verfahren nach Anspruch 1,
**dadurch gekennzeichnet, dass**
auf Basis der Schwarmdaten (12) zumindest ein die Fahrspur (5) charakterisierendes Kriterium bestimmt und vorhergesagt wird.

3. Verfahren nach einem der vorhergehenden Ansprüche,
**dadurch gekennzeichnet, dass**
eine Verfügbarkeit des Spurhalteassistenzsystems (2) in Abhängigkeit von einer prognostizierten zukünftigen teilweise assistierten Spurhaltebewegung (9) und in Abhängigkeit von der aktuellen und/oder zukünftigen Position (P) bestimmt wird.

4. Verfahren nach Anspruch 3,
**dadurch gekennzeichnet, dass**
sollte bestimmt werden, dass das Spurhalteassistenzsystem (2) nicht zur Verfügung steht, eine Warnnachricht für einen Fahrer des Kraftfahrzeugs (1) ausgegeben wird.

5. Verfahren nach Anspruch 3,
**dadurch gekennzeichnet, dass**
sollte bestimmt werden, dass das Spurhalteassistenzsystem (2) nur eingeschränkt zur Verfügung steht, eine Warnnachricht für einen Fahrer des Kraftfahrzeugs (1) ausgegeben wird, wobei die Warnnachricht beschreibt, welche Assistenzfunktion des Spurhalteassistenzsystems (2) eingeschränkt ist.

6. Verfahren nach einem der vorhergehenden Ansprüche,
**dadurch gekennzeichnet, dass**
die zumindest teilweise assistierte, zukünftige befahrbare Strecke (13) bei einer Routenplanung des Kraftfahrzeugs (1) berücksichtigt wird.

7. Computer Programmprodukt mit Programmbefehlen, welche bewirken, wenn die Programmbefehle von einer elektronischen Recheneinrichtung (6) abgearbeitet werden, ein Verfahren nach einem der Ansprüche 1 bis 6 durchzuführen.

8. Spurhalteassistenzsystem (2) für ein zumindest teilweise assistiert betreibbares Kraftfahrzeug (1), mit zumindest einer optischen Erfassungseinrichtung (5), mit einer Querregelungseinrichtung (10) und mit zumindest einer elektronischen Recheneinrichtung (6), wobei das Spurhalteassistenzsystem (2) zum Durchführen eines Verfahrens nach einem der Ansprüche 1 bis 6 ausgebildet ist.

## Claims

1. Method for operating a lane-keeping assistant system (2) of an at least partially assisted motor vehicle (1), in which, by means of an optical detection device (5) of the lane-keeping assistant system (2), surroundings (8) of the motor vehicle with a potential lane (4) are detected and evaluated by means of an electronic computing device (5) of the lane-keeping assistant system (2), and in which, according to the evaluated surroundings (8), an at least partially assisted lane-keeping movement (9) is carried out according to the evaluated surroundings (8) by means of a transverse control device (10) of the lane-keeping assistant system (2), in which, when the surroundings (8) are evaluated, swarm data (12) provided by an electronic computing device (11) external to the vehicle is taken into account, in which,
based on the swarm data (12), a route (13) which can be driven in the future, which is outside of a detection region (7) of the optical detection device (5), is evaluated, and a future partially assisted lane-keeping movement (9) for the transverse control device (10) is determined, in which, based on the swarm data (12), an at least partially drivable length (L) of the lane (4) and/or a time in the lane (4) which can be driven with at least partial assistance is determined without detecting the lane (4) by means of the optical detection device (5), **characterized in that**,
when determining the length (L) and/or the time, current weather and/or a road type and/or an event and/or a driver status of a driver of the motor vehicle (1) and/or a history of the swarm data (12) are taken into account.

2. Method according to Claim 1, **characterized in that**,
based on the swarm data (12), at least one criterion characterizing the lane (5) is determined and predicted.

3. Method according to any of the preceding claims, **characterized in that**
an availability of the lane-keeping assistant system (2) is determined according to a projected future partially assisted lane-keeping movement (9) and according to the current and/or future position (P).

4. Method according to Claim 3, **characterized in that**,
if it is determined that the lane-keeping assistant system (2) is not available, a warning message is output to a driver of the motor vehicle (1).

5. Method according to Claim 3, **characterized in that**,
if it is determined that the lane-keeping assistant system (2) is available to only a limited extent, a warning message is output to a driver of the motor vehicle (1), the warning message describing which assistant function of the lane-keeping assistant system (2) is limited.

6. Method according to any of the preceding claims, **characterized in that**
the at least partially assisted route (13) which can be driven in the future is taken into account when planning a route for the motor vehicle (1).

7. Computer program product comprising program commands which cause a method according to any of Claims 1 to 6 to be carried out when the program commands are processed by an electronic computing device (6).

8. Lane-keeping assistant system (2) for an at least partially assisted motor vehicle (1), comprising at least one optical detection device (5), comprising a transverse control device (10) and comprising at least one electronic computing device (6), wherein the lane-keeping assistant system (2) is configured to carry out a method according to any of Claims 1 to 6

## Revendications

1. Procédé permettant de faire fonctionner un système d'aide au maintien dans la voie (2) d'un véhicule automobile (1) fonctionnant de manière au moins partiellement assistée, dans lequel un dispositif de détection optique (5) du système d'aide au maintien dans la voie (2) permet de détecter un environnement (8) du véhicule automobile (1) avec une voie de circulation potentielle (4), et un dispositif de calcul électronique (5) du système d'aide au maintien dans la voie (2) permet de l'évaluer, et dans lequel, en fonction de l'environnement (8) évalué, un mouvement de maintien dans la voie (9) au moins partiellement assisté est effectué au moyen d'un dispositif de régulation transversale (10) du système d'aide au maintien dans la voie (2), dans lequel lors de l'évaluation de l'environnement (8), un dispositif de calcul électronique (11) externe au véhicule automobile tient compte de données collectives (12) fournies, dans lequel
un trajet praticable futur (13) qui est situé à l'extérieur d'une zone de détection (7) du dispositif de détection optique (5) est évalué sur la base des données collectives (12), et un mouvement de maintien dans la voie futur (9) partiellement assisté est déterminé pour le dispositif de régulation transversale (10), dans lequel sur la base des données collectives (12), une longueur (L) au moins partiellement praticable de la voie de circulation (4) et/ou un délai praticable au moins partiellement assisté sur la voie de circulation (4) sans détection de la voie de circulation (4) sont déterminés au moyen du dispositif de détection optique (5),
**caractérisé en ce que** lors de la détermination de la longueur (L) et/ou du délai, une météo actuelle et/ou un type de route et/ou un évènement et/ou un état de conducteur d'un conducteur du véhicule automobile (1) et/ou un historique des données collectives (12) sont pris en compte.

2. Procédé selon la revendication 1, **caractérisé en ce qu'**au moins un critère caractérisant la voie de circulation (5) est déterminé et prédit sur la base des données collectives (12).

3. Procédé selon l'une quelconque des revendications précédentes, **caractérisé en ce qu'**une disponibilité du système d'aide au maintien dans la voie (2) est déterminée en fonction d'un mouvement de maintien dans la voie futur (9) au moins partiellement assisté, pronostiqué, et en fonction de la position actuelle et/ou future (P).

4. Procédé selon la revendication 3, **caractérisé en ce qu'**un message d'avertissement est émis pour un conducteur du véhicule automobile (1) s'il est déterminé que le système d'aide au maintien dans la voie (2) est indisponible.

5. Procédé selon la revendication 3, **caractérisé en ce qu'**un message d'avertissement est émis pour un conducteur du véhicule automobile (1) s'il est déterminé que le système d'aide au maintien dans la voie (2) n'est disponible que de manière limitée, le message d'avertissement décrivant quelle fonction d'assistance du système d'aide au maintien dans la voie (2) est limitée.

6. Procédé selon l'une quelconque des revendications précédentes, **caractérisé en ce que** ledit trajet praticable futur (13) au moins partiellement assisté est pris en compte lors d'une planification d'itinéraire du véhicule automobile (1).

7. Produit de programme informatique, comprenant des instructions de programme qui, quand les instructions de programme sont exécutées par un dispositif de calcul électronique (6), provoquent l'exécution d'un procédé selon l'une quelconque des revendications 1 à 6.

8. Système d'aide au maintien dans la voie (2) pour un véhicule automobile (1) pouvant fonctionner de manière au moins partiellement assistée, comprenant au moins un dispositif de détection optique (5), un dispositif de régulation transversale (10) et au moins un dispositif de calcul électronique (6), dans lequel le système d'aide au maintien dans la voie (2) est réalisé pour exécuter un procédé selon l'une quelconque des revendications 1 à 6.
